Europäisches Patentamt

**European Patent Office**

Office européen des brevets

(19)

(11) Publication number: **0 114 152**
A2

(12)

# EUROPEAN PATENT APPLICATION

(21) Application number: **84830007.5**

(22) Date of filing: **10.01.84**

(51) Int. Cl.³: **A 21 C 11/24,** A 21 C 1/06,
A 21 C 1/14

(30) Priority: **17.01.83 IT 1914183**

(71) Applicant: **Pedrini, Ivano, Via dei Mille, 22, I-20098 San
Giuliano Milanese (Milano) (IT)**

(43) Date of publication of application: **25.07.84**
**Bulletin 84/30**

(72) Inventor: **Pedrini, Ivano, Via dei Mille, 22, I-20098 San
Giuliano Milanese (Milano) (IT)**

(74) Representative: **Cicogna, Franco, Ufficio Internazionale
Brevetti Dott.Prof. Franco Cicogna Via Visconti di
Modrone, 14/A, I-20122 Milano (IT)**

(84) Designated Contracting States: **AT BE CH DE FR GB LI
NL SE**

(54) **Portable electric geared motor assembly for food pastry kneading and making apparatus.**

(57) The assembly comprises an electric motor cooperating with reducing gear members, the shaft of the latter whereof ends with a shaped pin provided for engaging with one of the working rollers of a hand operated pastry kneading and making apparatus and enclosed in an insulating hand engageable casing including a slide effective to be slidingly received in a guide associated with the pastry kneading and making apparatus.

0114152

The present invention relates to an electric portable general purpose geared motor effective to be removably applied on hand operated apparatus for making food pastes and the like.

As it is known there are presently commercially available home apparatus for making or kneading food pastes such as "spaghetti",noodles, "ravioli" and the like which automatically carry out the kneading of the mentioned food products.

Some apparatus,of the above mentioned type, consist of a base body,associated with an electric motor,provided for driving a kneading device,as well as a device for forming and cutting sheets of pastry.

Kneading apparatus are also known comprising horizontal rollers for calendering and cutting the food paste or pastry and making ravioli,which apparatus also include a built-in electric motor,for driving the mentioned calendering rollers as well as the cutting elements associated therewith.

Hand operated apparatus are also commercially available which generally comprise a bearing structure supporting the pastry sheet calendering rollers, the pastry sheet cutting rollers as well as the ravioli making device.

The mentioned pastry making apparatus are provided with a crank including, at one end thereof, a rotatable handle and, at the other end, a shaped clutch to be engaged with the driving rollers which are formed with a corresponding housing to be driven by said hand operated crank.

In particular the above apparatus are also provided with a restraining device, including a suitable clamp member, for affixing them to a working surface.

It should be noted in this connection that the coupling of said apparatus to the working surface is a very difficult operation and that the manual driving of the crank requires a lot of energy and time.

Moreover, since the driving of the rollers is of manual type, it will be hardly constant, thereby negatively affecting the eveness of the produced pastry sheets.

Accordingly, the task of the present invention is that of overcoming the above mentioned drawbacks

-4-

0114152

by providing such a portable electric geared motor assembly which may be applied, in a simple and quick way, to the driving rollers of hand operated apparatus for kneading and making food pastry products.

Within that task, it is a main object of the present invention to provide such a portable electric geared motor assembly, for application on hand operated kneading apparatus, therein there is eliminated the problem of affixing the kneading apparatus on a working surface.

Another object of the present invention is to provide such a portable electric geared motor assembly which may be properly applied to any types of hand operated kneading and pastry sheet making apparatus.

Yet another object of the present invention is to provide an interexchangeable type of portable electric geared motor assembly for application to any types of hand operated kneading and pastry making apparatus, which may be used either in succession or alternatively, thereby affording the possibility of making electrically operated mechanical assemblies.

Yet another object of the present invention is to provide such a portable electric geared motor assembly effective to be applied to any known kneading apparatus for making "spaghetti", ravioli, noodles and the like.

According to one aspect of the present invention, the above mentioned task and objects, as well as yet other objects, which will become more apparent hereinafter, are achieved by a portable electric geared motor assembly, effective to be applied on kneading apparatus, ravioli making apparatus and hand operated kneading and pastry making apparatus for driving the kneading and pastry making devices of said apparatus, characterized in that it comprises an electric motor, cooperating with reducing gear members, the axle of the latter whereof ends with a shaped pin provided for engaging with one of the rollers of said hand operated kneading apparatus and enclosed in an insulating hand engageable casing including a slide, said apparatus further including a guide for slidingly receiving said slide.

Further characteristics and advantages of the portable electric geared motor assembly for application to pastry kneading and making apparatus according to the present invention will become more apparent hereinafter from the following detailed description of a preferred embodiment of said portable electric geared motor, being illustrated by way of example and not of limitation in the figures of the accompanying drawings, where:

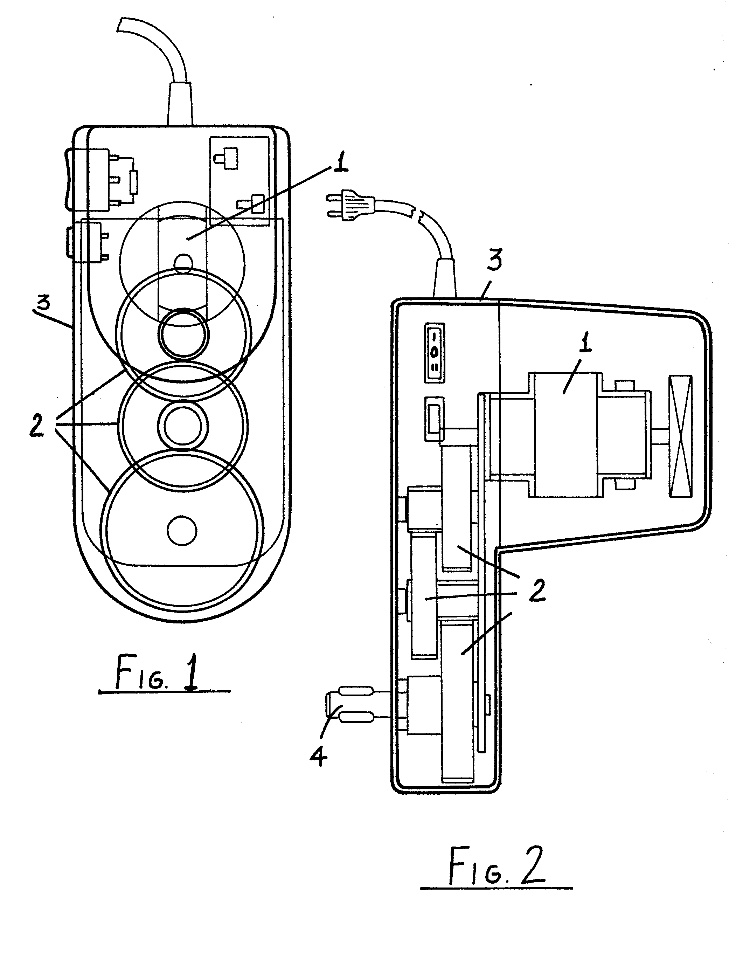

fig.1 is a longitudinal cross-section view of the portable electric geared motor assembly according to the present invention;

fig.2 is a further longitudinal cross-section view of that same assembly, taken through a perpendicular plane to the preceding one;

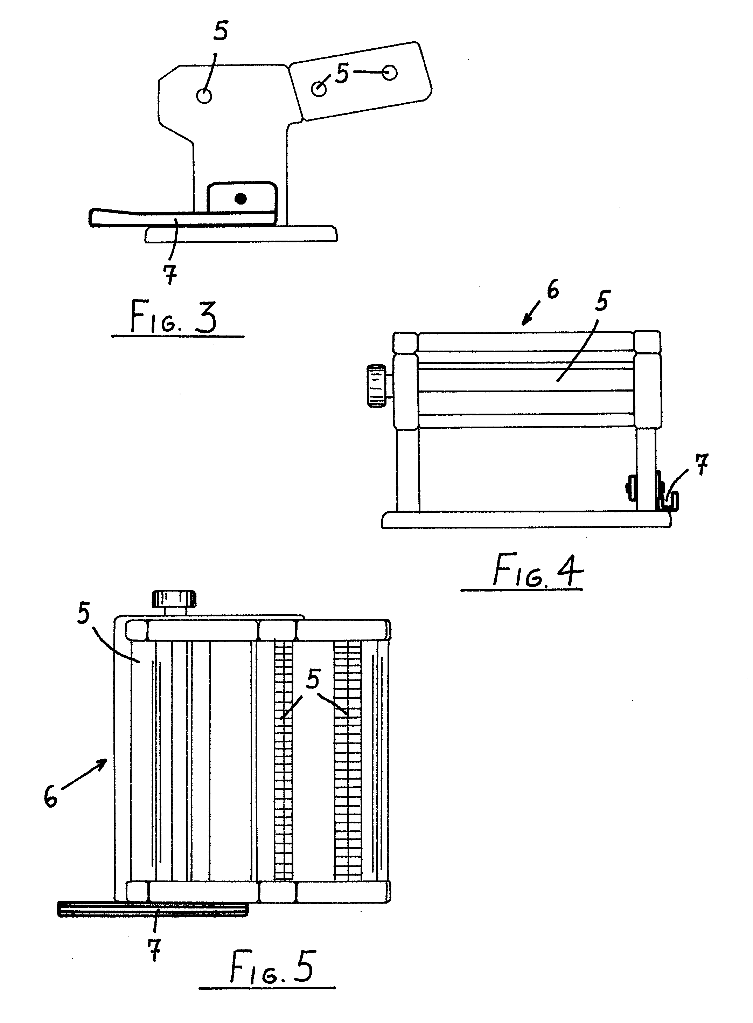

figs.3,4 and 5 illustrate,respectively by side,front ant top views,a hand operated apparatus for making pastry sheets and the like;

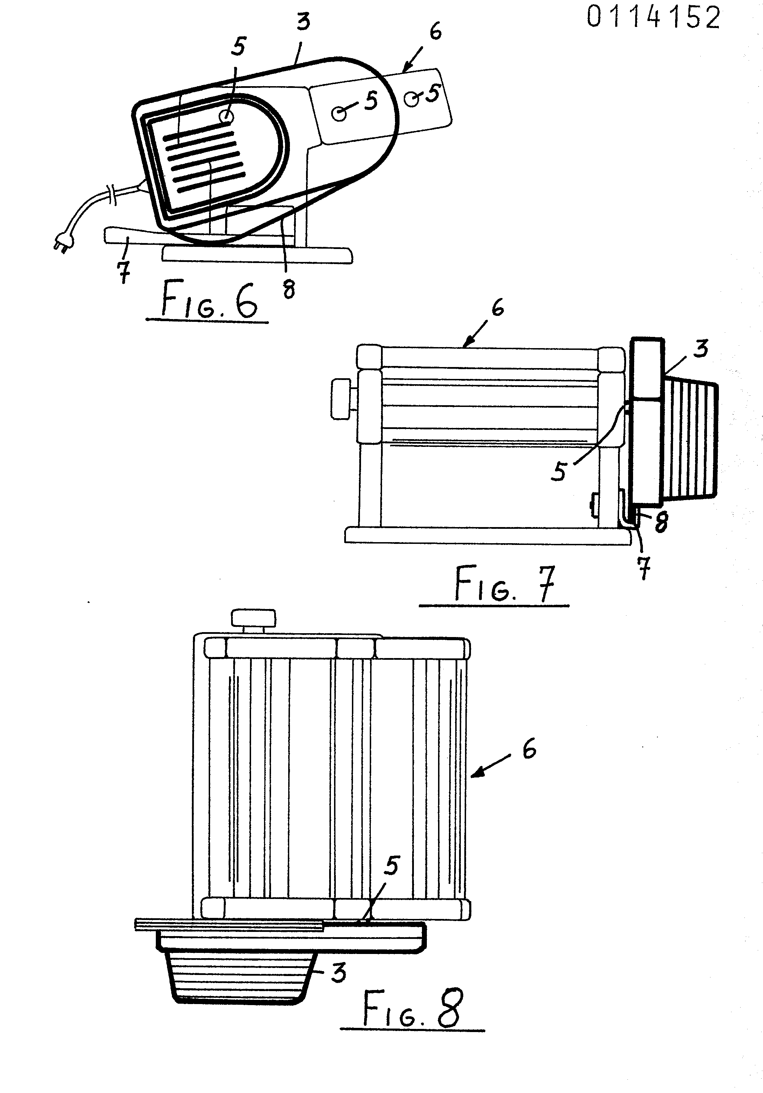

figs.6,7 and 8 illustrate the procedure for applying the subject portable electric geared motor assembly to the above apparatus; and

figs.9 and 10 illustrate a kneading apparatus the structure whereof has been specifical- designed for receiving the portable electric geared
motor assembly according to the present invention,
by suitable affixing means.

With reference to the above figures, the
portable electric geared motor assembly according
to the present invention comprises an electric
motor 1, cooperating with a plurality of reducing
gear members 2 and enclosed, together with the
latter, in a box-shaped body or casing 3, made of an
insulating material and so designed and arranged
as to be easily gripped

The axle or shaft of one of the above
mentioned reducing gear members is extended, outside
from the casing 3, by a suitably shaped pin 4,
effective to be engaged with the housing or seat
as conventionally formed in the roller 5 of a hand
operated apparatus 6 for making pastry or paste
food products.

On said apparatus, in particular, there is
applied a guide 7, effective to slidingly receive a
slide 8, arranged cantilever-wise perimetrically of
said box-like body or casing, 3.

0114152

It should be noted that the portable
electric geared motor assembly according to the
present invention is housed, by its pin or insert
4 in any working rollers and is effective to drive
them independently from the different levels and
spacings of said rollers, in the different types of
apparatus.

Moreover the guide 7 and slide 8 form,
jointly to said driving pin or insert, the second
and third coupling points.

The apparatus is coupled by simply
inserting the driving pin into the seat of the
preset working roller and housing the slide of the
portable electric geared motor assembly into the
guide set on the apparatus; the disengaging, for
selecting other working rollers, is carried out by
reversing the disclosed procedure.

It should moreover be pointed out that
the particular design of the box-shaped body 3 and
its firm coupling to the apparatus, afford the
possibility of using the latter without the need of
affixing it to a bearing surface.

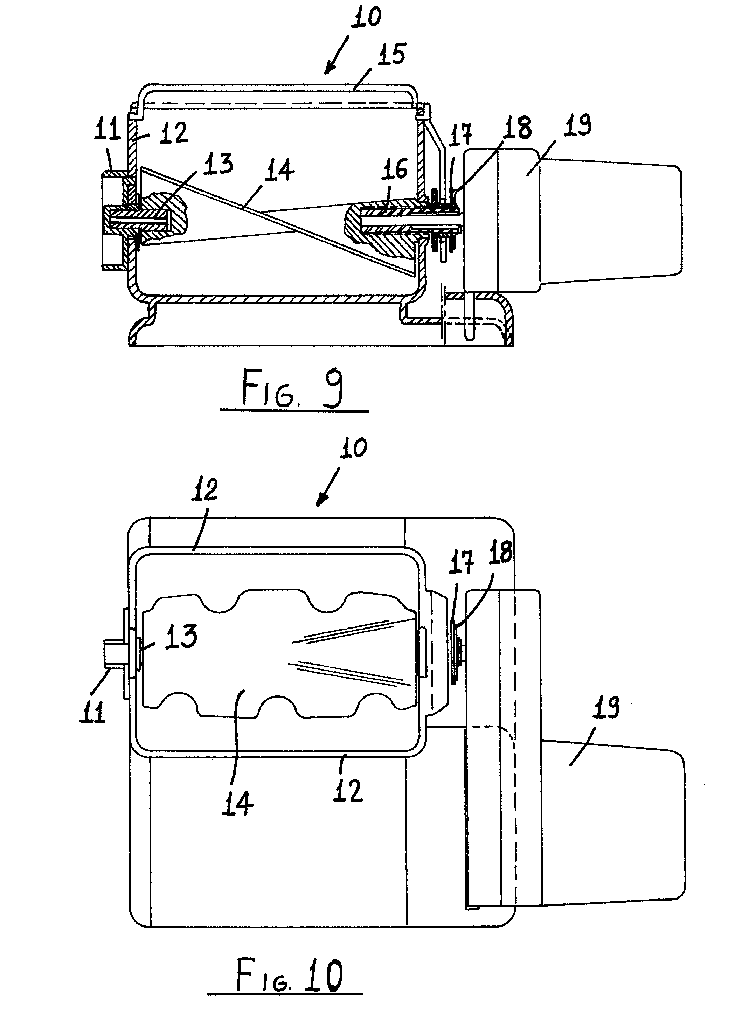

Figs. 9 and 10 illustrate a further home-use

0114152

pastry kneading and making apparatus which also forms an integrating part of the electromechanical system driven by the portable electric geared motor assembly according to the present invention.

More specifically the pastry kneading and making apparatus cooperating with the assembly according to the invention comprises a knob 11, mounted on a pin 13 supported by the casing of the kneading apparatus itself.

The pin 13 supports a screw or scroll member 14, effective to rotate in a seat formed in the body or casing of the kneader 12 and closed by a cover member 15.

The mentioned screw 14 is supported by a shart 16, for receiving movement thereby.

The kneader is moreover provided with lock washers 17 and a snap engaging ring member 18.

To the body or casing of the kneader 12 there is applied the guide effective to slidingly receive the mentioned slide 8 associated with the portable electric geared motor assembly according to the present invention.

While a preferred embodiment of the invention has been hereinabove disclosed, it should be noted that it is susceptible to several modifications and variations all whereof do not depart from the scope and spirit of the invention as defined in the accompanying claims.

0114152

C L A I M S

1- A portable electric geared motor assembly,
effective to be applied on kneading apparatus,
ravioli making apparatus and hand operated
kneading and pastry making apparatus for driving
the kneading and pastry making devices of said
apparatus,characterized in that it comprises an
electric motor (1),cooperating with reducing
gear members (2),the axle or the latter whereof
ends with a shaped pin (4) provided for engaging
with one of the rollers (5) of said hand operated
kneading apparatus and enclosed in an insulating
hand engageable casing (3) including a slide (8),
said apparatus further including a guide (7) for
slidingly receiving said slide (8).

2- A portable electric geared motor assembly,
according to claim 1,characterized in that said slide
(8) is cantilever-wise arranged perimetrically
of said insulating casing.

3- A portable electric geared motor assembly,
according to one or more of the preceding claims,
characterized in that it is housed,with its shaped
driving pin (4),in a working roller (5) of said

0114152

apparatus and is effective to drive said roller at a constant speed, independently from the location and spacing of said rollers.

4- A portable electric geared motor assembly according to one or more of the preceding claims, characterized in that it is so designed and arranged as to be associated with a kneading apparatus for kneading and making food pastry products for home use and including a knob (11), mounted on a pin (13), and supported by the body (3) of said pastry kneading apparatus (12).

5- A portable electric geared motor assembly according to claim 4, characterized in that the pin (13) of said kneading apparatus (12) carries a screw or scroll member (14) effective to rotate in a housing or seat formed in the body or casing (3) of said kneading apparatus and closed by a cover member (15), said screw (14) being coupled to a driving shaft (16).

6- A portable electric geared motor assembly, according to one or more of the preceding claims, characterized in that it comprises lock washers and a snap engaging ring member (18).

7- A portable electric geared motor assembly, according to one or more of the preceding claims, characterized in that on the body or casing (3) of said kneading apparatus there is applied a guide (7) therewith a slide (8) may be engaged, which is integral with said electric geared motor assembly.

8- A portable electric geared motor assembly, according to one or more of the preceding claims, characterized in that it is effective to drive, by means of said guide (7)-slide (8) assembly, several mechanical sets,for home use,for kneading and making food pastry or paste products in general.

9- A portable electric geared motor assembly, according to one or more of the preceding claims, characterized in that it is so designed and arranged as to drive home-use ravioli making apparatus.

10-A portable electric geared motor assembly, according to one or more of the preceding claims, characterized in that said pastry kneading and making apparatus is provided with a safety device effective to prevent said apparatus from operating as the cover is disengaged therefrom.

0114152

Fig. 1

Fig. 2

0114152

Fig. 3

Fig. 4

Fig. 5

0114152

FIG. 6

FIG. 7

FIG. 8

0114152

FIG. 9

FIG. 10